(19) Europäisches Patentamt
European Patent Office
Office européen des brevets

(11) **EP 2 573 719 A1**

(12) **EUROPEAN PATENT APPLICATION**

(43) Date of publication:
**27.03.2013 Bulletin 2013/13**

(51) Int Cl.:
***G06N 7/00*** *(2006.01)*

(21) Application number: **12167934.4**

(22) Date of filing: **14.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.07.2011 US 201113191956**

(71) Applicant: **Honeywell International Inc.
Morristown, NJ 07962-2245 (US)**

(72) Inventor: **Havlena, Vladimir
Morristown, NJ New Jersey 07962-2245 (US)**

(74) Representative: **Houghton, Mark Phillip
Patent Outsourcing Limited
1 King Street
Bakewell, Derbyshire DE45 1DZ (GB)**

(54) **Kalman filtering and inferential sensing for a system with uncertain dynamics**

(57)    A method and system include a system with uncertain parameters having a deterministic input, a noise calculator coupled to an output of the uncertain system to generate an equivalent noise covariance matrix, and a stochastic system with known parameters coupled to receive the deterministic input and the equivalent noise covariance matrix to provide an output. The process noise with equivalent process noise covariance matrix provides additional input to the system with known parameters to provide the same output uncertainty as in the system with uncertain parameters.

*FIG. 1*

**Description**

**Background**

Inferential sensing is widely used to estimate nonmeasurable disturbances like properties of products or changes of the process, for example calorific value of a fuel, amount of leaking air, reactivity of the initiator etc. An inferential sensor uses a mathematical model of a process and disturbance generator, and Kalman filter technology for estimation of their internal state.

In case of a model mismatch, the quality of the estimates may be affected by modeling errors with negative impact on control/optimization performance. The robustness of inferential sensing with respect to modeling error is low, but can be increased by including an explicit description of model uncertainty into the Kalman filter design.

**Summary**

A method and system include an uncertain system having a deterministic controlled input and unmeasurable disturbance. The output uncertainty depends on model uncertainty and properties of the input signals (controlled input and disturbance). A noise calculator coupled to an output of the uncertain system is used to generate process noise with a time-varying covariance matrix in such a way, that a stochastic system with deterministic (certain) dynamics coupled to receive the deterministic controlled input, unmeasurable disturbance and the additive process noise input with time varying covariance matrix is equivalent to the uncertain system in the sense to provide the same output uncertainty.

A method includes providing a deterministic control input to an uncertain multivariable state space model, evaluation uncertainty of individual states, calculating a time varying covariance matrix of the equivalent process noise from an uncertainty of individual states of the uncertain state space model, using the equivalent process noise with time-varying covariance matrix to a state space model with fixed parameters to obtain an output from the state space model with fixed parameters as a function of the deterministic controlled input and injected equivalent process noise with time-varying variance.

A method for the design of a Kalman filter for a system with uncertain dynamics is based on an equivalent representation of a deterministic system with uncertain dynamics by a stochastic system with known dynamics.

**Brief Description of the Drawings**

FIG. 1 is a block diagram illustrating translation of an uncertain first order system with a deterministic input to a deterministic system with process noise input according to an example embodiment.

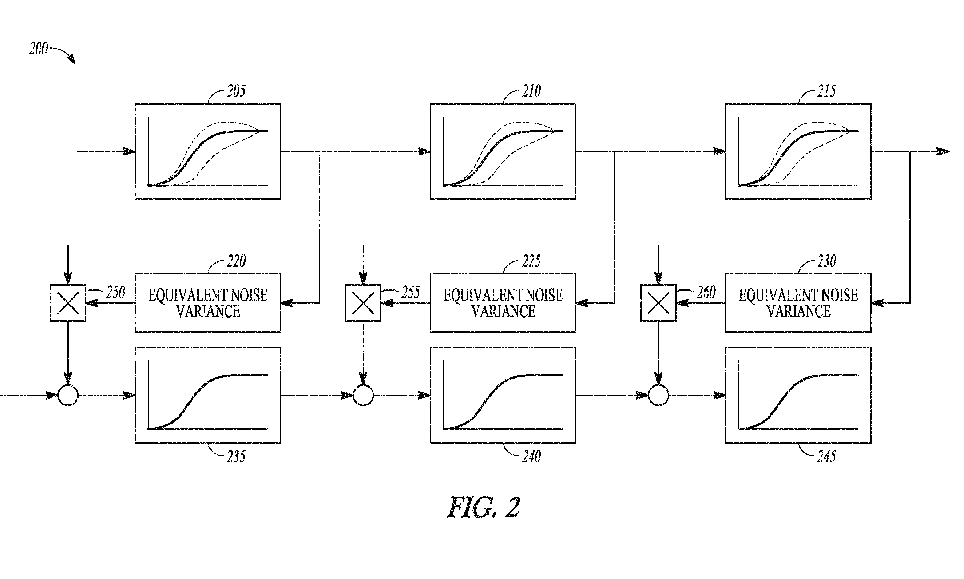

FIG. 2 is block diagram of a one type of multivariable system represented as a multiple stage system according to an example embodiment.
FIG. 3A is a waveform display of an controlled input and two equivalent process noise inputs for two stages according to an example embodiment.
FIG. 3B is a waveform display of an output of a first stage having an uncertainty envelope according to an example embodiment.
FIG. 3C is a waveform display of an output of a second stage having an uncertainty envelope according to an example embodiment.
FIG. 4 is a flow chart illustrating a method to obtain an equivalent noise matrix according to an example embodiment.
FIG. 5 is a block diagram of an example computing system to perform methods and calculations according to an example embodiment.

**Detailed Description**

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

The uncertainty of a dynamic process model is typically significantly higher during a transient while the uncertainty of a steady state gain may be small. Such a case can be described by a step response with a time-varying uncertainty band. However it is not known how to design an inferential sensor (based on Kalman filter technology) for an uncertain process model.

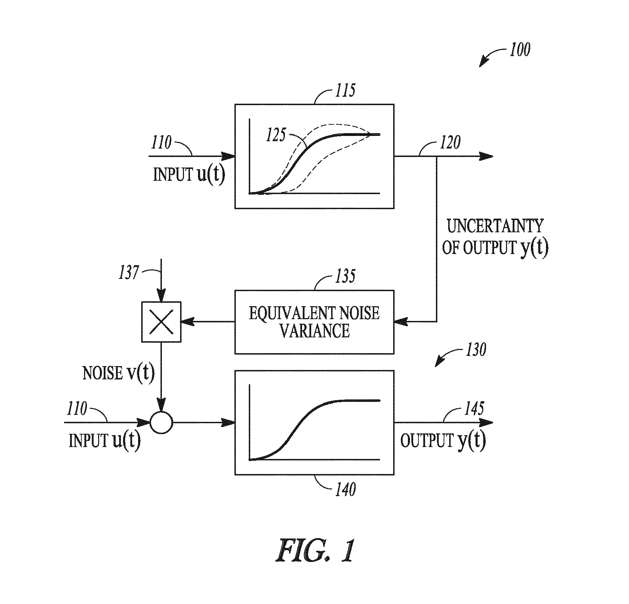

One example of an uncertain system with a deterministic input is illustrated in FIG. 1 at 100. An input u(t) is shown at 110, feeding into a first order dynamic block 115 with uncertain step response, resulting in an output y(t) at 120.

The step response of the system is illustrated in block 115 as a curve 125 that transitions from a zero initial condition at the left to another steady state on the right side of the curve. Broken lines envelope about the curve 125 illustrate a range of values the step response curve may take for corresponding inputs within $\pm$ 1 standard deviation. In other words, there is an uncertainty within the system that results in an uncertain output. The uncertainty is less in the two steady state conditions at the beginning and end of the curve 125, with greater uncertainty during the time the input is changing.

Utilizing the uncertainty of the system 100, the uncertain system with deterministic input is translated into a certain system with additional stochastic input called process noise as illustrated at 130. An equivalent noise variance from the uncertainty of output of system 100 is generated and provided at 135 as an input modulating the variance of the process noise using input noise 137 with unit variance to a first order system 140. The input signal consists of a controlled input and an unmeasurable disturbance that is estimated by an inferential sensor. The unmeasurable disturbance is modeled by a disturbance generator that is part of the extended state space model. System or block 140 provides a deterministic transfer function and provides an output y(t) at 145. The process noise provides an additive disturbance of the input signal 110, effectively providing the uncertainty in the output.

Consider a model 200 consisting of interconnected 1st order functional blocks 205, 210, and 215. These blocks represent stages in an uncertain system. In one embodiment, a Kalman filter design for uncertain systems is created by finding the magnitude of process noise acting on the inputs to the individual blocks that results in equivalent uncertainty on the output of the block.

The concept of "equivalent noise" with magnitude described by time-varying variances at different positions $q_{i,j}$ of a process noise covariance matrix Q enables the design of a Kalman filter that takes into account the uncertainty caused by the uncertainty of the model. The equivalent process noise variance is obtained for each of the filters 205, 210, and 215 as illustrated at 220, 225, and 230, and is used to modulate amplitude of the process noise entering deterministic filters respectively indicated at 235, 240, and 245. Note that in system 200, the outputs of each of the filters 205 and 210 is provided as an input to the next filter in the a series of filters, while the equivalent noise variance is taken from each filter, or stage to be provided at corresponding deterministic filters in a multiple stage deterministic system. Thus, the uncertainty excitation provided by inputs of individual blocks that affects the equivalent noise variance differs in each of the individual process noise injection points 250, 255, and 260.

Unlike the classical Kalman filter design with noise properties independent of the deterministic process inputs (manipulated variables and measurable disturbance variables), the equivalent noise representing the uncertainty of the dynamic model is time varying and its magnitude reflects the uncertainty excitation resulting from the variability of deterministic inputs that can be recursively calculated as a part of the Kalman filter algorithm.

The Kalman filter estimates the (invisible/nonmeasurable) internal state of a system using visible/measurable input and output signals. If some disturbance cannot be measured, it can be modeled by the disturbance generator that can be used to augment/extend the state space model of a system. Then the Kalman filter for the augmented/extended state space model estimates the internal state of the augmented system - including the state of the disturbance generator. Based on the state of the disturbance generator its output value can be calculated.

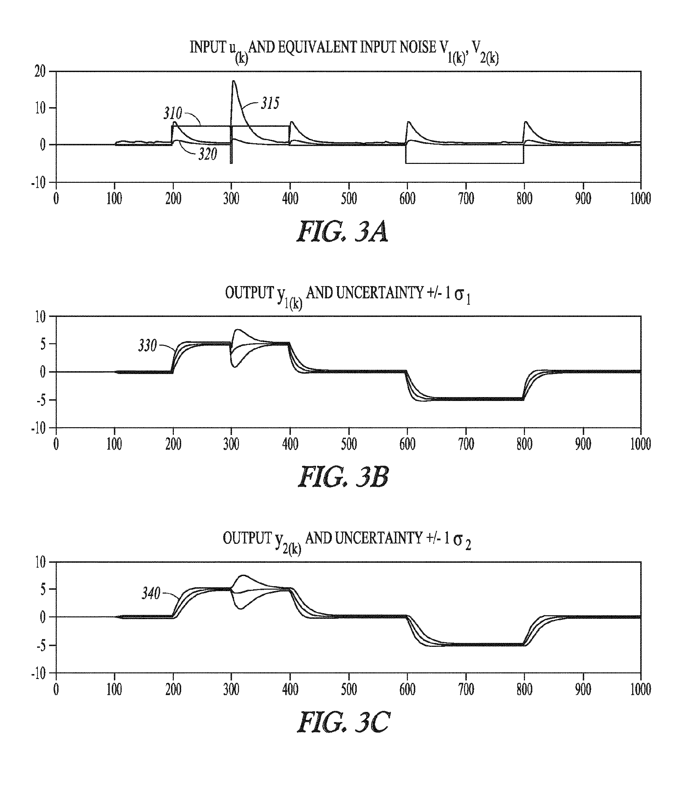

FIGs. 3A, 3B, and 3C illustrate various waveforms corresponding to an initial stage input u(k), stage outputs $y_1(k)$, $y_2(k)$, and equivalent input noise variances $v_1(k)$ and $v_2(k)$ for two stages of a design, such as stages corresponding to blocks 205 and 210. Input u(k) at 310 is stable from time 100 to 200, then transitions to a high level at time 200, is stable again until a spike low at time 300, and then stable until further abrupt transitions at times 400, 600, and 800. An input uncertainty of the first stage or block is indicated at 315, and as previously described, corresponds to equivalent input noise $v_1(k)$ variance. The input uncertainty for the first stage is quite large during transitions of the input signal. The input uncertainty is fairly low when the input is in a steady state for an extended period of time. One can see that the during and immediately following an input signal transition, the uncertainty spikes and then decays to low levels over time as the input remains in a steady state as is reflected at 315. An input uncertainty of the second stage or block is indicated at 320, and as previously described, corresponds to equivalent input noise $v_2(k)$ variance. This input uncertainty is a bit lower, as the input corresponds to the output of the second stage. Input uncertainty 320 also spikes with transitions in the corresponding input signal, and also decays to low levels following spikes when the input remains in a steady state condition.

FIG. 3B illustrates the output $y_1$(k), with a corresponding uncertainty envelope at 330. The envelope reflects the output uncertainty of the first stage within $\pm$ 1 standard deviation. FIG. 3C illustrates the output $y_2$(k), with a corresponding uncertainty envelope at 340, reflecting the output uncertainty of the second stage within $\pm$ 1 standard deviation.

In various embodiments, a stochastic state space model with varying process noise variance Q is used in the design of an inferential sensor that will be robust with respect to model uncertainty. Currently inferential sensors based on Kalman filter technology are used e.g. to estimate the calorific value of fuel, an amount of air leaking into a furnace, fuel particle size, etc. The method presented provides an estimator of noise magnitude (in terms of individual variances $q_{i,j}$) and a resulting time varying process noise covariance matrix **Q** is provided as an additional input to the Kalman filter based inferential sensor.

The equivalent noise variance may be obtained using many different methods. In one embodiment, a system may be described by a discrete-time state-space equation

$$x(k+1) = A(\theta)x(k) + B(\theta)u(k)$$
$$y(k) = C(\theta)x(k) + D(\theta)u(k) \quad,$$

where $x(k)$ is an $n$-dimensional vector of system state, $u(k)$ is an $m$-dimensional vector of system input, $y(k)$ is an $r$-dimensional vector of system output, $A(\theta)$, $B(\theta)$, $C(\theta)$, $D(\theta)$ are matrices of corresponding dimensions and $\theta$ is a $p$-dimensional vector of system parameters. $n, m,$ and $p$ are integers in one embodiment.

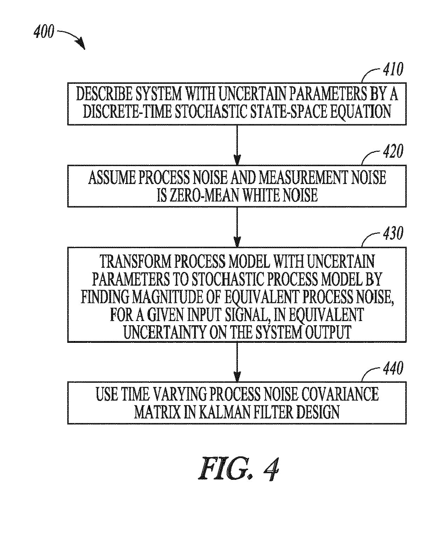

If the vector of system parameters is not exactly known, the dynamic response of the system is uncertain. The problem of state estimation for uncertain systems is not resolved. A method 400 in FIG. 4 may be used to obtain the equivalent noise variance. As a first step, the system with uncertain parameters can be described by a discrete-time stochastic state-space equation as indicated at 410

$$x(k+1) = A(\theta_0)x(k) + B(\theta_0)u(k) + v(k)$$
$$y(k) = C(\theta_0)x(k) + D(\theta_0)u(k) + e(k) \quad,$$

where $u(k)$ is $n$-dimensional vector of process noise, $e(k)$ is $r$-dimensional vector of output measurement noise, and $\theta_0$ is a known nominal value of system parameters. It will be assumed that the process noise is a zero-mean white noise at 420 with variance $Q(k)$

$$v(k) \sim N(0, Q(k)) \quad,$$

and the measurement noise is a zero-mean white noise with variance R(k)

$$e(k) \sim N(0, R(k)) \quad.$$

Then the process model with uncertain parameters can be transformed to a stochastic process model by finding the magnitude of the equivalent process noise v(k) that results - for a given input signal - in equivalent uncertainty on the system output at 430.

For a given uncertain parameter $\theta_i$, its impact on state uncertainty (difference of the state from its mean value)

$$\tilde{x}(k) = x(k) - E\{x(k)\}$$

can be described as

$$\tilde{x}_{(i)}(k) \approx \begin{bmatrix} \dfrac{\partial A}{\partial \theta_i} & \dfrac{\partial B}{\partial \theta_i} \end{bmatrix} \begin{bmatrix} x(k) \\ u(k) \end{bmatrix}$$

and for a given uncertainty of the parameter $\theta_i$ defined by its variance

$$\mathrm{var}(\theta_i) = \sigma_{i,i}^2$$

the corresponding contribution to the state uncertainty defined by state covariance

$$Q_{(i,i)}(k) = E\left\{ \tilde{x}_{(i)}(k)\tilde{x}_{(i)}^{T}(k) \right\}$$

can be calculated as

$$Q_{(i,i)}(k) = \sigma_{i,i}^2 \begin{bmatrix} \dfrac{\partial A}{\partial \theta_i} & \dfrac{\partial B}{\partial \theta_i} \end{bmatrix} \begin{bmatrix} x(k) \\ u(k) \end{bmatrix} \begin{bmatrix} x(k) \\ u(k) \end{bmatrix}^{T} \begin{bmatrix} \dfrac{\partial A}{\partial \theta_i} & \dfrac{\partial B}{\partial \theta_i} \end{bmatrix}^{T} .$$

The cumulative effect of the model uncertainty (for uncorrelated uncertainties of individual parameters) is then given as

$$Q(k) = \sum_{i=1}^{p} Q_{(i,i)}(k)$$

Using this time-varying process noise covariance matrix, the Kalman filter design then may be performed in a standard manner, taking into account this time-varying covariance matrix calculated at each time step as an additional input as shown above at 440.

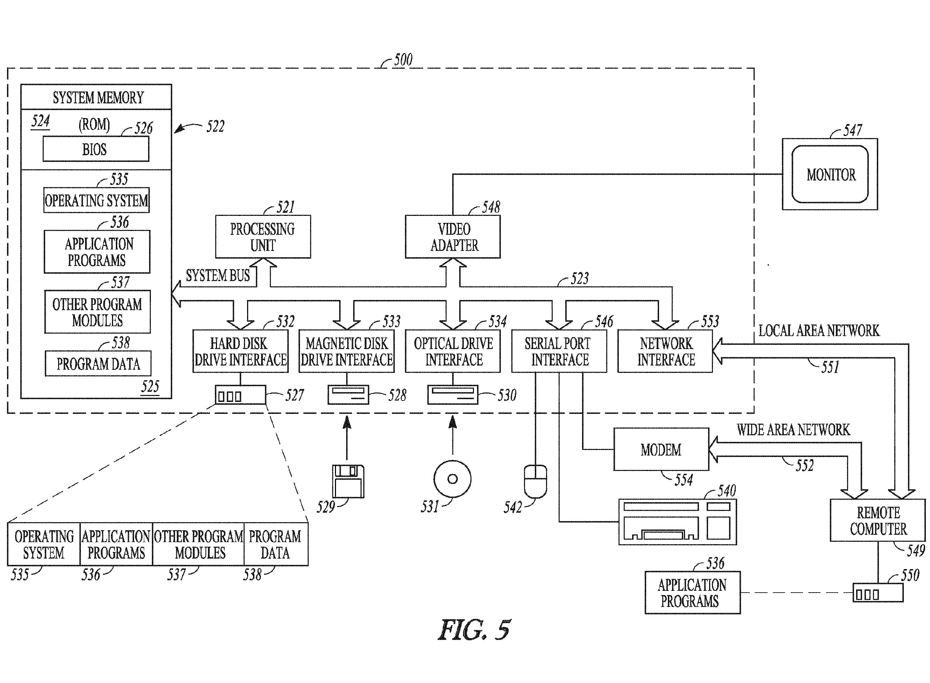

FIG. 5 is a block diagram of a computer system to implement methods according to an example embodiment. In the embodiment shown in FIG. 5, a hardware and operating environment is provided that may be used to implement the filter blocks and calculate equivalent noise variance matrices. In various embodiments, many of the components illustrated need not be used. The computer system may be implemented as a microprocessor or application specific integrated circuit in various embodiments. Further types of circuitry to execute desired functions may be used in still further embodiments.

In one embodiment, the computer system is programmed to implement an algorithm that embeds the following elements: A system with uncertain parameters has a deterministic input. A noise calculator is coupled to an output of the system with uncertain parameters to generate an equivalent noise covariance matrix. A stochastic system with fixed parameters is coupled to receive the deterministic input and the process noise with time-varying covariance matrix to provide an output, wherein the process noise with equivalent process noise covariance matrix provides a disturbance of system with fixed parameters to provide the same output uncertainty as in the system with uncertain parameters

As shown in FIG. 5, one embodiment of the hardware and operating environment includes a general purpose computing device in the form of a computer 500 (e.g., a personal computer, workstation, or server), including one or more processing units 521, a system memory 522, and a system bus 523 that operatively couples various system components including the system memory 522 to the processing unit 521. There may be only one or there may be more than one processing unit 521, such that the processor of computer 500 comprises a single central-processing unit (CPU), or a plurality of processing units, commonly referred to as a multiprocessor or parallel-processor environment. In various embodiments, computer 500 is a conventional computer, a distributed computer, or any other type of computer.

The system bus 523 can be any of several types of bus structures including a memory bus or memory controller, a peripheral bus, and a local bus using any of a variety of bus architectures. The system memory can also be referred to as simply the memory, and, in some embodiments, includes read-only memory (ROM) 524 and random-access memory (RAM) 525. A basic input/output system (BIOS) program 526, containing the basic routines that help to transfer information between elements within the computer 500, such as during start-up, may be stored in ROM 524. The computer 500 further includes a hard disk drive 527 for reading from and writing to a hard disk, not shown, a magnetic disk drive 528 for reading from or writing to a removable magnetic disk 529, and an optical disk drive 530 for reading from or writing to a removable optical disk 531 such as a CD ROM or other optical media.

The hard disk drive 527, magnetic disk drive 528, and optical disk drive 530 couple with a hard disk drive interface 532, a magnetic disk drive interface 533, and an optical disk drive interface 534, respectively. The drives and their associated computer-readable media provide non volatile storage of computer-readable instructions, data structures, program modules and other data for the computer 500. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 529, optical disk 531, ROM 524, or RAM 525, including an operating system 535, one or more application programs 536, other program modules 537, and program data 538. Programming for implementing one or more processes or method described herein may be resident on any one or number of these computer-readable media.

A user may enter commands and information into computer 500 through input devices such as a keyboard 540 and pointing device 542. Other input devices (not shown) can include a microphone, joystick, game pad, satellite dish, scanner, or the like. These other input devices are often connected to the processing unit 521 through a serial port interface 546 that is coupled to the system bus 523, but can be connected by other interfaces, such as a parallel port, game port, or a universal serial bus (USB). A monitor 547 or other type of display device can also be connected to the system bus 523 via an interface, such as a video adapter 548. The monitor 547 can display a graphical user interface for the user. In addition to the monitor 547, computers typically include other peripheral output devices (not shown), such as speakers and printers.

The computer 500 may operate in a networked environment using logical connections to one or more remote computers or servers, such as remote computer 549. These logical connections are achieved by a communication device coupled to or a part of the computer 500; the invention is not limited to a particular type of communications device. The remote computer 549 can be another computer, a server, a router, a network PC, a client, a peer device or other common network node, and typically includes many or all of the elements described above I/0 relative to the computer 500, although only a memory storage device 550 has been illustrated. The logical connections depicted in FIG. 5 include a local area network (LAN) 551 and/or a wide area network (WAN) 552. Such networking environments are commonplace in office networks, enterprise-wide computer networks, intranets and the internet, which are all types of networks.

When used in a LAN-networking environment, the computer 500 is connected to the LAN 551 through a network interface or adapter 553, which is one type of communications device. In some embodiments, when used in a WAN-networking environment, the computer 500 typically includes a modem 554 (another type of communications device) or any other type of communications device, e.g., a wireless transceiver, for establishing communications over the wide-area network 552, such as the internet. The modem 554, which may be internal or external, is connected to the system bus 523 via the serial port interface 546. In a networked environment, program modules depicted relative to the computer 500 can be stored in the remote memory storage device 550 of remote computer, or server 549. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

**Claims**

1.   A system (100) comprising:

a system (115) with uncertain parameters having a deterministic input (110);
a noise calculator (135) coupled to an output (120) of the system with uncertain parameters to generate an equivalent noise covariance matrix (135); and

a stochastic system (140) with fixed parameters coupled to receive the deterministic input (110) and the equivalent noise covariance matrix (135) to provide an output (145), wherein the process noise with equivalent process noise covariance matrix provides a disturbance of system with fixed parameters to provide the same output uncertainty as in the system with uncertain parameters.

2. The system of claim 1 wherein an uncertainty associated with an output is transformed by the equivalent noise variance calculator (135) to the equivalent noise covariance matrix as a function of the provided output uncertainty.

3. The system of claim 2 wherein the uncertainty is translated to stochastic perturbations (315, 320) with time varying variance.

4. The system of claim 3 wherein a Kalman filter (140) is used to estimate the state of the stochastic system.

5. The system of claim 4 wherein the uncertain system (115) is transformed to the stochastic system (140) without uncertainty in dynamics.

6. The system of claim 5 wherein for a given uncertain parameter $\theta_i$, its contribution to the uncertainty defined by state covariance is calculated as

$$Q_{(i,i)}(k) = \sigma_{i,i}^2 \begin{bmatrix} \dfrac{\partial A}{\partial \theta_i} & \dfrac{\partial B}{\partial \theta_i} \end{bmatrix} \begin{bmatrix} x(k) \\ u(k) \end{bmatrix} \begin{bmatrix} x(k) \\ u(k) \end{bmatrix}^T \begin{bmatrix} \dfrac{\partial A}{\partial \theta_i} & \dfrac{\partial B}{\partial \theta_i} \end{bmatrix}^T$$

where x(k) is an *n*-dimensional vector of system state, *u*(*k*) is an *m*-dimensional vector of system input, *u*(*k*) is *n*-dimensional vector of process noise, *e*(*k*) is *r*-dimensional vector of output measurement noise, $A(\theta)$, $B(\theta)$ are matrices of corresponding dimensions and $\theta$ is a *p*-dimensional vector of system parameters.

7. The system of claim 1 wherein the input signal (110) consists of controlled input and unmeasurable disturbance that is estimated by an inferential sensor.

8. The system of claim 1 wherein for a given uncertain parameter $\theta_i$, its contribution to the uncertainty defined by state covariance is calculated as

$$Q_{(i,i)}(k) = \sigma_{i,i}^2 \begin{bmatrix} \dfrac{\partial A}{\partial \theta_i} & \dfrac{\partial B}{\partial \theta_i} \end{bmatrix} \begin{bmatrix} x(k) \\ u(k) \end{bmatrix} \begin{bmatrix} x(k) \\ u(k) \end{bmatrix}^T \begin{bmatrix} \dfrac{\partial A}{\partial \theta_i} & \dfrac{\partial B}{\partial \theta_i} \end{bmatrix}^T$$

where x(k) is an *n*-dimensional vector of system state, *u*(*k*) is an *m*-dimensional vector of system input, *u*(*k*) is *n*-dimensional vector of process noise, *e(k)* is *r*-dimensional vector of output measurement noise, $A(\theta)$, $B(\theta)$ are matrices of corresponding dimensions and $\theta$ is a *p*-dimensional vector of system parameters.

9. A method comprising:

providing a deterministic input (110) to a system (115) with uncertain parameters (125, 410) having a deterministic input;

calculating an equivalent noise variance (135, 430) from an uncertainty of an output (120) from the system with uncertain parameters;

injecting process noise (137) with equivalent noise variance (135) to the system; and

providing the input and process noise to a system (140) with known parameters to obtain an output (145) from the system as a function of the deterministic input and process noise with equivalent noise variance.

10. The method of claim 9 wherein the equivalent stochastic system with known parameters comprises a Kalman filter (140) that provides estimate of internal state of the system.

**11.** The method of claim 10 wherein the uncertainty is time varying as a function of input signal transitions (310), and wherein the uncertainty is higher when the input signal is transitioning between states, and lower when the input signal is steady state.

**12.** The method of claim 11 wherein for a given uncertain parameter $\theta_i$, its contribution to the uncertainty defined by state covariance is calculated as

$$Q_{(i,i)}(k) = \sigma_{i,i}^2 \begin{bmatrix} \dfrac{\partial A}{\partial \theta_i} & \dfrac{\partial B}{\partial \theta_i} \end{bmatrix} \begin{bmatrix} x(k) \\ u(k) \end{bmatrix} \begin{bmatrix} x(k) \\ u(k) \end{bmatrix}^T \begin{bmatrix} \dfrac{\partial A}{\partial \theta_i} & \dfrac{\partial B}{\partial \theta_i} \end{bmatrix}^T,$$

where x(k) is an *n*-dimensional vector of system state, *u(k)* is an *m*-dimensional vector of system input, *u(k)* is *n*-dimensional vector of process noise, *e(k)* is *r*-dimensional vector of output measurement noise, *A(θ)*, *B*(θ) are matrices of corresponding dimensions and θ is a *p*-dimensional vector of system parameters.

**13.** The method of claim 12 and further comprising using the time varying covariance in design of the Kalman filter (140).

*FIG. 1*

*FIG. 2*

INPUT u$_{(k)}$ AND EQUIVALENT INPUT NOISE V$_{1(k)}$, V$_{2(k)}$

*FIG. 3A*

OUTPUT y$_{1(k)}$ AND UNCERTAINTY +/- 1 σ$_1$

*FIG. 3B*

OUTPUT y$_{2(k)}$ AND UNCERTAINTY +/- 1 σ$_2$

*FIG. 3C*

400

410

DESCRIBE SYSTEM WITH UNCERTAIN PARAMETERS BY A
DISCRETE-TIME STOCHASTIC STATE-SPACE EQUATION

420

ASSUME PROCESS NOISE AND MEASUREMENT NOISE
IS ZERO-MEAN WHITE NOISE

430

TRANSFORM PROCESS MODEL WITH UNCERTAIN
PARAMETERS TO STOCHASTIC PROCESS MODEL BY
FINDING MAGNITUDE OF EQUIVALENT PROCESS NOISE,
FOR A GIVEN INPUT SIGNAL, IN EQUIVALENT
UNCERTAINTY ON THE SYSTEM OUTPUT

440

USE TIME VARYING PROCESS NOISE COVARIANCE
MATRIX IN KALMAN FILTER DESIGN

*FIG. 4*

*FIG. 5*

Europäisches
Patentamt

European
Patent Office

Office européen
des brevets

# EUROPEAN SEARCH REPORT

Application Number

EP 12 16 7934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nina P. G. Salau ET AL: "A New Process Noise Covariance Matrix Tuning Algorithm for Kalman Based State Estimators", 7th IFAC International Symposium on Advanced Control of Chemical Processes (2009), 31 December 2009 (2009-12-31), XP55053458, DOI: 10.3182/20090712-4-TR-2008.00092 Retrieved from the Internet: URL:http://www.nt.ntnu.no/users/skoge/prost/proceedings/adchem09/cd/abstract/86.pdf [retrieved on 2013-02-14] * the whole document * | 1-13 | INV. G06N7/00 |
| X | DAUM F: "Nonlinear filters: beyond the Kalman filter", IEEE AEROSPACE AND ELECTRONIC SYSTEMS MAGAZINE, IEEE SERVICE CENTER, PISCATAWAY, NJ, US, vol. 20, no. 8, 1 August 2005 (2005-08-01), pages 57-69, XP011244513, ISSN: 0885-8985 * the whole document * | 1-4,9, 10,13 | |

TECHNICAL FIELDS
SEARCHED (IPC)

G06N

The present search report has been drawn up for all claims

| Place of search | Date of completion of the search | Examiner |
|---|---|---|
| The Hague | 15 February 2013 | Valencia, Erika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document